# EUROPEAN PATENT SPECIFICATION

(11) **EP 3 890 072 B1**
(45) Date of publication and mention of the grant of the patent: **24.09.2025**
(21) Application number: 21166414.9
(22) Date of filing: 31.03.2021
(51) Int. Cl.: H01M 4/525, H01M 10/0525, H01M 10/0567, H01M 10/0568, H01M 10/0569, C07F 9/02

(54) **NON-AQUEOUS ELECTROLYTE AND LITHIUM SECONDARY BATTERY INCLUDING THE SAME**
WASSERFREIER ELEKTROLYT UND LITHIUMSEKUNDÄRBATTERIE DAMIT
ÉLECTROLYTE NON AQUEUX ET BATTERIE SECONDAIRE LE COMPRENANT

(30) Priority: 03.04.2020 KR 20200040766
(43) Date of publication of application: 06.10.2021
(73) Proprietor: SK On Co., Ltd., Seoul 03161 (KR)
(72) Inventor: PARK, Dai In, 34124 Daejeon (KR); KIM, Myoung Lae, 34124 Daejeon (KR); KIM, Sung Jin, 34124 Daejeon (KR); SHIM, Yu Na, 34124 Daejeon (KR); LEE, Joo Hyun, 34124 Daejeon (KR); CHO, In Haeng, 34124 Daejeon (KR)
(74) Representative: Stolmár & Partner Patentanwälte PartG mbB

(56) References cited:
- WO-A1-2018/164138
- US-A1- 2001 004 506

## Description

### CROSS-REFERENCE TO RELATED APPLICATION AND CLAIM OF PRIORITY

This application claims priority to Korean Patent Applications No. 10-2020-0040766 filed on April 3, 2020 in the Korean Intellectual Property Office (KIPO).

### BACKGROUND

### 1. Field

The present invention relates to a non-aqueous electrolyte solution and a lithium secondary battery including the same. More particularly, the present invention relates to a non-aqueous electrolyte solution including a non-aqueous solvent and an additive and a lithium secondary battery including the same.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of an electric automobile such as a hybrid vehicle.

The lithium secondary battery is highlighted among various secondary batteries due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape.

A lithium metal oxide may be used as a cathode active material for the lithium secondary battery. The lithium metal oxide may include, e.g., a nickel-based lithium metal oxide.

As an application of the lithium secondary battery is expanded, the lithium secondary battery having longer life-span, higher capacity and operation stability is required. Accordingly, the lithium secondary battery providing uniform power and capacity during repeated charging and discharging operations may be advantageous.

However, a surface of the nickel-based lithium metal oxide used as the cathode active material may be damaged during the repeated charging and discharging operations to cause a reduction of power and capacity. Further, a side reaction between the electrolyte and the nickel-based lithium metal oxide may be caused.

For example, as disclosed in Korean Published Patent Application No. 10-2019-0119615 or in US 2001/004506 A1, an additive may be included in a non-aqueous electrolyte for a lithium secondary battery to enhance battery properties.

### SUMMARY

According to an aspect of the present invention, there is provided a non-aqueous electrolyte solution capable of providing improved mechanical and chemical stability.

According to an aspect of the present invention, there is provided a lithium secondary battery including the non-aqueous electrolyte solution and having improved operational stability and electrical property.

According to exemplary embodiments of the present invention, a non-aqueous electrolyte solution includes a non-aqueous organic solvent, a lithium salt and a phosphonate-based additive represented by Chemical Formula 1.

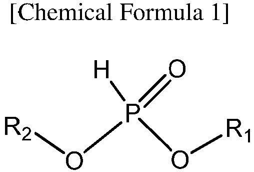

In Chemical Formula 1, R₁ and R₂ are each independently a substituted or unsubstituted hydrocarbon having 3 to 10 carbon atoms and including a terminal alkynyl group.

In some embodiments, the phosphonate-based additive may be represented by Chemical Formula 1-1.

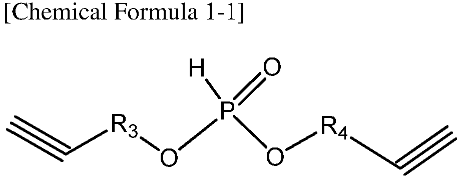

In Chemical Formula 1-1, R₃ and R₄ are each independently a substituted or unsubstituted C₁-C₈ alkylene group.

In some embodiments, a substituent may be bonded to at least one carbon atom of the alkylene group, and the substituent may include a C1-C7 alkyl group, a C2-C7 alkenyl group, a C2-C7 alkynyl group, a C1-C7 alkoxy group, halogen, a cyano group (-CN), a hydroxy group (-OH) or a nitro group (-NO₂).

In some embodiments, an amount of the phosphonate-based additive may be from 0.1 wt% to 5 wt% based on a total weight of the non-aqueous electrolyte solution.

The non-aqueous organic solvent consists of ethylene carbonate, ethyl methyl carbonate and diethyl carbonate.

According to exemplary embodiments of the present invention, a lithium secondary battery includes a cathode including a lithium-transition metal oxide as a cathode active material, an anode and a separation layer interposed between the anode and the cathode and the non-aqueous electrolyte solution according to embodiments as described above.

In some embodiments, the lithium-transition metal oxide may be represented by Chemical Formula 2 below.

Li₁₊ₐNi_{1-(x+y)}COₓM_{y}O₂ [Chemical Formula 2]

In Chemical Formula 2, -0.05≤a≤0.15, 0.01≤x≤0.3, 0.01≤y≤0.3, and M includes at least one element selected from the group consisting of Mn, Mg, Sr, Ba, B, Al, Si, Ti, Zr or W.

In some embodiments, in Chemical Formula 2, 0.01≤x≤0.2, 0.01≤y≤0.2.

The non-aqueous electrolyte solution according to embodiments of the present invention may include a phosphonate-based additive having a specific structure. For example, in the phosphonate-based additive, a phosphorus (P) atom may be combined with a metal element of a cathode active material through, e.g., a tautomerization. Further, the combination with the metal element may be promoted by a triple bond group included in the phosphonate-based additive.

Accordingly, even when being operated in a high-temperature environment, damages to a surface of the cathode active material and side reactions of the cathode active material and the non-aqueous electrolyte may be suppressed, thereby improving electrical and chemical stability of a lithium secondary battery.

### BRIEF DESCRIPTION OF THE DRAWINGS

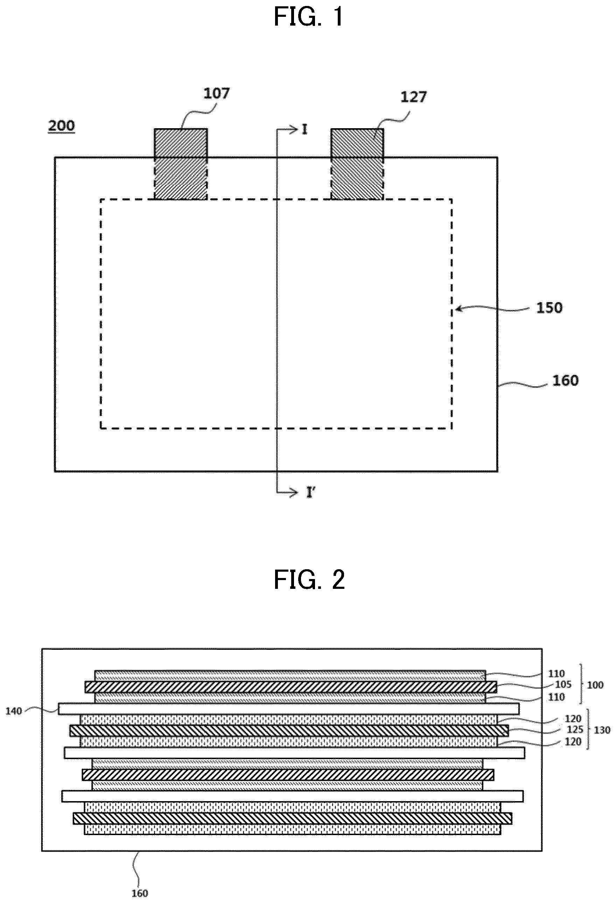

FIGS. 1 and 2 are a schematic top planar view and a schematic cross-sectional view, respectively, illustrating a lithium secondary battery in accordance with exemplary embodiments.

### DETAILED DESCRIPTION OF THE EMBODIMENTS

According to exemplary embodiments of the present invention, a non-aqueous electrolyte solution including a phosphonate-based additive is provided. A lithium secondary battery including the non-aqueous electrolyte solution and having improved electrical, mechanical and chemical stability is also provided.

### Non-Aqueous Electrolyte Solution

A non-aqueous electrolyte solution according to exemplary embodiments of the present invention includes a non-aqueous organic solvent, an electrolyte (e.g., lithium salt) and a phosphonate-based additive.

The electrolyte includes a lithium salt. The lithium salt may include, e.g., a compound represented by Li⁺X⁻. Non-limiting examples of the anion (X-) of the lithium salt may include F, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃cF₂SO₃⁻, (CF₃SO₂)₂N⁻, (FSO₂)₂N⁻, CF₃CF₂(CF₃)₂CO⁻, (CF₃SO₂)₂CH⁻, (SF₃)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc. These may be used alone or in a combination thereof.

In an embodiment, the lithium salt may be included in a concentration from about 0.01 M to about 5 M, preferably from about 0.01 M to 2 M with respect to the organic solvent. Within the above range, a transfer of lithium ions and/or electrons may be promoted during charging and discharging of the lithium secondary battery, thereby providing improved capacity.

In exemplary embodiments, the phosphonate-based additive may include a compound represented by the following Chemical Formula 1.

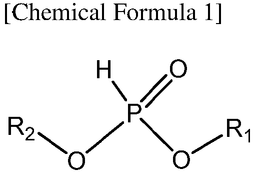

In the Chemical Formula 1 above, R₁ and R₂ may each independently be a substituted or unsubstituted hydrocarbon having 3 to 10 carbon atoms and including a terminal alkynyl group.

The term "hydrocarbon" used in the present application may include a cyclic aliphatic group, a linear aliphatic group, an aromatic group or a combination thereof. The hydrocarbon group may include a structure in which a functional group including a hetero atom is interposed between at least one carbon-carbon bond.

In exemplary embodiments, the phosphonate-based additive may be represented by Chemical Formula 1-1 below.

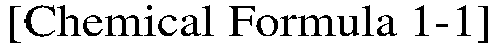

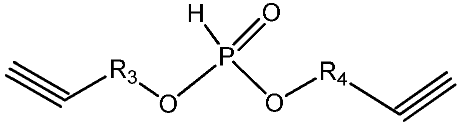

In the Chemical Formula 1-1 above, R₃ and R₄ may each independently be a substituted or unsubstituted hydrocarbon having 1 to 8 carbon atoms. For example, R₃ and R₄ may each independently be a substituted or unsubstituted C₁-C₈ alkylene group.

The alkylene group may include a substituent bonded to at least one carbon atom. Examples of the substituent may include a C₁-C₇ alkyl group, a C₂-C₇ alkenyl group, a C₂-C₇ alkynyl group, a C₁-C₇ alkoxy group, halogen, a cyano group (-CN), a hydroxy group (-OH), a nitro group (-NO₂), etc.

The phosphonate-based additive according to the above-described exemplary embodiments may include a hydrogen atom bonded to a phosphorus (P) atom. For example, the phosphate-based additive may form an equilibration of H-P=O phase and :P-OH phase in the non-aqueous electrolyte solution through a tautomerization. Accordingly, an unshared electron pair of the phosphorus (P) atom may form a coordination bond with, e.g., a metal atom of the cathode active material as will be described later.

Thus, a passivation effect on a surface of the cathode active material may be substantially implemented, and side reactions between the cathode active material and the non-aqueous electrolyte solution may be reduced.

Additionally, the phosphonate-based additive may include two alkoxy groups including a terminal triple bond. The relatively electron-rich triple bond unit may be exposed to a terminal end of the additive, so that an additional interaction or bond with the metal atom of the cathode active material may be created.

Accordingly, passivation and surface stabilization effects of the cathode active material may be intensified, so that high temperature stability and life-span stability of the lithium secondary battery may be remarkably improved.

In some embodiments, an amount of the phosphonate-based additive based on a total weight of the non-aqueous electrolyte solution may be less than about 10 weight percent (wt%), preferably from about 0.1 wt% to 5 wt%. Within the above range, while sufficiently implementing the above-described passivation and surface stabilization effects of the cathode active material, a mobility of lithium ions and an activity of the cathode active material may not be excessively degraded.

In some embodiments, the non-aqueous electrolyte solution may further include an auxiliary additive.

The auxiliary additive may include, e.g., a carbonate-based compound such as vinylene carbonate, vinylethylene carbonate, fluoroethylene carbonate, or the like; an anhydride-based compound such as succinic anhydride and maleic anhydride; a nitrile-based compound such as glutaronitrile, succinonitrile, adiponitrile, or the like; a sulfone-based compound such as 1,3-propane sultone, 1,3-propene sultone, ethylene sulfate, or the like. These may be used alone or in combination thereof.

The auxiliary additive may be included in an appropriate amount within a range that may not inhibit the passivation effect of the above-described phosphonate-based additive and the mobility of the lithium ions in the non-aqueous electrolyte solution.

For example, the auxiliary additive may be included in an amount from about 0.1 wt% to 5 wt%, preferably 0.1 wt% to 3 wt%, based on the total weight of the non-aqueous electrolyte solution.

### Lithium Secondary Battery

According to exemplary embodiments of the present invention, a lithium secondary battery including the non-aqueous electrolyte solution is provided.

FIGS. 1 and 2 are a schematic top planar view and a schematic cross-sectional view, respectively, illustrating a lithium secondary battery in accordance with exemplary embodiments. For example, FIG. 2 is a cross-sectional view taken along a line I-I' of FIG. 1.

Referring to FIGS. 1 and 2, the lithium secondary battery may include an electrode assembly including a cathode 100, an anode 130 and a separation layer 140 interposed between the cathode and the anode. The electrode assembly may be accommodated in a case 160 together with the electrolyte to be impregnated therein.

The cathode 100 may include a cathode active material layer 110 formed by coating a cathode active material on a cathode current collector 105. The cathode active material may include a compound capable of reversibly intercalating and deintercalating lithium ions.

In exemplary embodiments, the cathode active material may include a lithium-transition metal oxide. For example, the lithium-transition metal oxide may include nickel (Ni), and may further include at least one of cobalt (Co) and manganese (Mn).

For example, the lithium-transition metal oxide may be represented by Chemical Formula 2 below.

Li₁₊ₐNi_{1-(x+y)}COₓM_{y}O₂ [Chemical Formula 2]

In the Chemical Formula 2 above, -0.05≤a≤0.15, 0.01≤x≤0.3, 0.01≤y≤0.3, and M may include at least one element selected from Mn, Mg, Sr, Ba, B, Al, Si, Ti, Zr and W.

As represented in Chemical Formula 1, the lithium-transition metal oxide may contain Ni in the largest amount or molar ratio among Ni, Co and Mn. Ni may substantially function as a metal related to a power and/or a capacity of the lithium secondary battery, and the high-capacity and high-power lithium secondary battery may be implemented by including Ni in the largest amount among transition metals.

In an embodiment, in Chemical Formula 2, 0.01≤x≤0.2 and 0.01≤y≤0.2.

If an amount of Ni in the cathode active material or the lithium-transition metal oxide increases, chemical stability and storage stability at high temperature of the secondary battery may be deteriorated. Further, damages to the surface of the cathode active material or side reactions with the non-aqueous electrolyte solution may be caused during repeated charging/discharging operations, and sufficient high power/high capacity properties from the high-Ni content may not be realized.

However, as described above, the phosphonate-based additive according to Chemical Formula 1 may be combined with Ni on the surface of the cathode active material or the lithium-transition metal oxide through a coordination or a chemical interaction to provide the passivation of the cathode active material. Accordingly, high power/capacity properties from the high-Ni content may be maintained substantially uniformly for a long period even in a high temperature environment.

A slurry may be prepared by mixing and stirring the cathode active material in a solvent with a binder, a conductive agent and/or a dispersive agent. The slurry may be coated on the cathode current collector 105, and then dried and pressed to form the cathode 100.

The cathode current collector 105 may include stainless-steel, nickel, aluminum, titanium, copper or an alloy thereof. Preferably, aluminum or an alloy thereof may be used.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer may be reduced, and an amount of the cathode active material may be relatively increased. Thus, capacity and power of the lithium secondary battery may be further improved.

The conductive agent may be added to facilitate electron mobility between active material particles. For example, the conductive agent may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

The anode 130 may include an anode current collector 125 and an anode active material layer 120 formed by coating an anode active material on the anode current collector 125.

The anode active material may include a material commonly used in the related art which may be capable of adsorbing and ejecting lithium ions. For example, a carbon-based material such as a crystalline carbon, an amorphous carbon, a carbon complex or a carbon fiber, a lithium alloy, silicon (Si)-based compound, tin, etc., may be used. The amorphous carbon may include a hard carbon, cokes, a mesocarbon microbead (MCMB), a mesophase pitch-based carbon fiber (MPCF), etc.

The crystalline carbon may include a graphite-based material such as natural graphite, graphitized cokes, graphitized MCMB, graphitized MPCF, etc. The lithium alloy may further include aluminum, zinc, bismuth, cadmium, antimony, silicon, lead, tin, gallium, indium, etc.

The silicon-based compound may include, e.g., silicon oxide or a silicon-carbon composite compound such as silicon carbide (SiC).

For example, the anode active material may be mixed and stirred together with the above-mentioned binder, conductive agent, thickener, etc., in a solvent to form a slurry. The slurry may be coated on at least one surface of the anode current collector 125, and dried and pressed to form the anode 130.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without a loss by, e.g., precipitation or sedimentation.

In exemplary embodiments, an electrode cell may be defined by the cathode 100, the anode 130 and the separation layer 140, and a plurality of the electrode cells may be stacked to form an electrode assembly 150 that may have e.g., a jelly roll shape. For example, the electrode assembly 150 may be formed by winding, laminating or folding the separation layer 140.

The electrode assembly 150 may be accommodated in a case 160 together with the non-aqueous electrolyte solution according to exemplary embodiments as described above to obtain the lithium secondary battery

As illustrated in FIG. 1, electrode tabs (a cathode tab and an anode tab) may protrude from the cathode current collector 105 and the anode electrode current collector 125 included in each electrode cell to one side of the case 160. The electrode tabs may be welded together with the one side of the case 160 to form an electrode lead (a cathode lead 107 and an anode lead 127) extending or exposed to an outside of the case 160.

The lithium secondary battery may be manufactured in, e.g., a cylindrical shape using a can, a square shape, a pouch shape or a coin shape.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

### Examples and Comparative Examples

### Example 1

A slurry was prepared by mixing Li[Ni_{0.6}Co_{0.2}Mn_{0.2}]O₂ as a cathode active material, carbon black as a conductive material and polyvinylidene fluoride (PVdF) as a binder in a weight ratio of 92:5:3. The slurry was uniformly applied to an aluminum foil having a thickness of 15 µm, and then vacuum-dried at 130°C and pressed to prepare a cathode for a lithium secondary battery.

A slurry including 95 wt% of natural graphite as an anode active material, 1 wt% of Super-P as a conductive agent, 2 wt% of styrene-butadiene rubber (SBR) as a binder and 2 wt% of carboxymethyl cellulose (CMC) as a thickener was prepared. The anode slurry was uniformly coated, dried and pressed on a 15 µm-thick copper foil to prepare an anode.

The cathode and the anode obtained as described above were notched with a proper size and stacked, and a separator (polyethylene, thickness: 20 µm) was interposed between the cathode and the anode to form an electrode cell. Each tab portion of the cathode and the anode was welded. The welded cathode/separator/anode assembly was inserted in a pouch, and three sides of the pouch except for an electrolyte injection side were sealed. The tab portions were also included in sealed portions. A non-aqueous electrolyte solution was injected through the electrolyte injection side, and then the electrolyte injection side was also sealed. Subsequently, the above structure was impregnated for more than 12 hours to prepare a lithium secondary battery sample.

After dissolving 1.0 M LiPF₆ in a mixed solvent of EC/EMC/DEC (25/45/30; volume ratio), 0.5 wt% of the compound represent by Chemical Formula 3 below as a phosphonate-based additive was added to prepare the non-aqueous electrolyte solution.

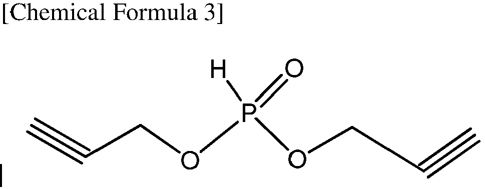

### Example 2

A lithium secondary battery sample was prepared by the same method as that in Example 1, except that an amount of the phosphonate-based additive in the non-aqueous electrolyte solution was changed to 0.1 wt%.

### Example 3

A lithium secondary battery sample was prepared by the same method as that in Example 1, except that an amount of the phosphonate-based additive in the non-aqueous electrolyte solution was changed to 5 wt%.

### Example 4

A lithium secondary battery sample was prepared by the same method as that in Example 1, except that an amount of the phosphonate-based additive in the non-aqueous electrolyte solution was changed to 10 wt%.

### Comparative Example 1

A lithium secondary battery sample was prepared by the same method as that in Example 1, except that the phosphonate-based additive was not used.

### Comparative Example 2

A lithium secondary battery sample was prepared by the same method as that in Example 1, except that a compound represented by Chemical Formula 4 below was used as the phosphonate-based additive.

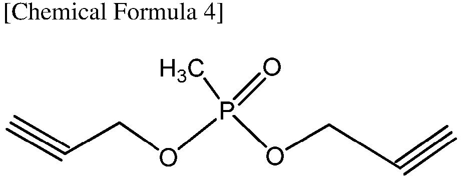

### Comparative Example 3

A lithium secondary battery sample was prepared by the same method as that in Example 1, except that a compound represented by Chemical Formula 5 below was used as the phosphonate-based additive.

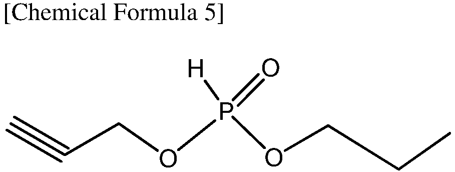

### Experimental Example

### (1) Evaluation on life-span property at room temperature

Charging (CC-CV 1.0 C 4.2V 0.05C CUT-OFF) and discharging (CC 1.0C 3.0V CUT-OFF) were repeated 1,000 times for each of the lithium secondary battery samples prepared in Examples and Comparative Examples. A ratio (%) of the discharge capacity at 1,000th cycle relative to the discharge capacity at 1st cycle was calculated to evaluate a life-span property at room temperature.

### (2) Evaluation on high temperature property

Each sample of the lithium secondary battery prepared in Examples and Comparative Examples was charged under the conditions of CC-CV 1C 4.2V 0.1C CUT-OFF, and then stored in an oven at 60°C for 8 weeks. The sample was discharged under the condition of CC 0.5C 2.75V CUT-OFF, and then charged under the condition of CC-CV 0.5C 4.2V 0.05C CUT-OFF. Thereafter, a discharging amount was measured again under the condition of CC 0.5C 2.75V CUT-OFF. A capacity recovery ratio was measured by comparing the discharging amount with a discharging amount when performing standard charging and discharging. Further, an increasing ratio of a thickness of the secondary battery was measured after the high-temperature storage/charging and discharging as described above.

The evaluation results are shown in Table 1 below.

**[Table 1]**

| | Life-span property at room temperature (%) | High temperature storage property | |
|---|---|---|---|
| | | Capacity recovery ratio (%) | Thickness increasing ratio (%) |
| Example 1 | 80 | 81 | 12 |
| Example 2 | 81 | 78 | 16 |
| Example 3 | 64 | 84 | 6 |
| Example 4 | 58 | 85 | 5 |
| Comparative Example 1 | 81 | 69 | 32 |
| Comparative Example 2 | 75 | 72 | 30 |
| Comparative Example 3 | 80 | 74 | 20 |

Referring to Table 1, when the phosphonate-based additive according to exemplary embodiments as described by Chemical Formula 1 was included in the non-aqueous electrolyte solution, improved capacity retention and mechanical stability were achieved even after the high-temperature storage compared to those from Comparative Examples. However, in the case of Example 4, as the amount of the phosphonate-based additive slightly increased, the life-span property at room temperature was slightly lowered.

When using the additive in which a methyl group is bonded to a phosphorus (P) atom (Comparative Example 2) and an additive having one terminal alkynyl group (Comparative Example 3), high-temperature stability improvement was not substantially realized due to a reduction of an interaction with the cathode.

## Claims

1. A non-aqueous electrolyte solution, comprising:
a non-aqueous organic solvent consisting of ethylene carbonate, ethyl methyl carbonate and diethyl carbonate;
a lithium salt; and
a phosphonate-based additive represented by Chemical Formula 1: 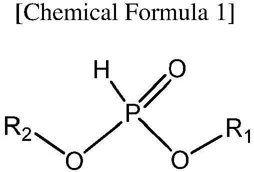
wherein, in Chemical Formula 1, R₁ and R₂ are each independently a substituted or unsubstituted hydrocarbon having 3 to 10 carbon atoms and including a terminal alkynyl group.

2. The non-aqueous electrolyte solution according to claim 1, wherein the phosphonate-based additive is represented by Chemical Formula 1-1: 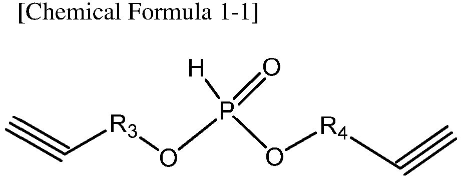 wherein, in Chemical Formula 1-1, R₃ and R₄ are each independently a substituted or unsubstituted C₁-C₈ alkylene group.

3. The non-aqueous electrolyte solution according to claim 2, wherein a substituent is bonded to at least one carbon atom of the alkylene group, and the substituent includes a C1-C7 alkyl group, a C2-C7 alkenyl group, a C2-C7 alkynyl group, a C1-C7 alkoxy group, halogen, a cyano group (-CN), a hydroxy group (-OH) or a nitro group (-NO₂).

4. The non-aqueous electrolyte solution according to claim 1, wherein an amount of the phosphonate-based additive is from 0.1 wt% to 5 wt% based on a total weight of the non-aqueous electrolyte solution.

5. A lithium secondary battery, comprising:
a cathode including a lithium-transition metal oxide as a cathode active material;
an anode;
a separation layer interposed between the anode and the cathode; and
the non-aqueous electrolyte solution according to claim 1.

6. The lithium secondary battery according to claim 5, wherein the lithium-transition metal oxide is represented by Chemical Formula 2 below:
[Chemical Formula 2] Li₁₊ₐNi_{1-(x+y)}COₓM_{y}O₂
wherein, in Chemical Formula 2, -0.05≤a≤0.15, 0.01≤x≤0.3, 0.01≤y≤0.3, and M includes at least one element selected from the group consisting of Mn, Mg, Sr, Ba, B, Al, Si, Ti, Zr or W.

7. The lithium secondary battery according to claim 6, wherein in Chemical Formula 2, 0.01≤x≤0.2, 0.01≤y≤0.2.

## Patentansprüche

1. Eine nichtwässrige Elektrolytlösung, umfassend:
ein nicht-wässriges organisches Lösungsmittel, bestehend aus Ethylencarbonat, Ethylmethylcarbonat und Diethylcarbonat;
ein Lithiumsalz; und
ein Additiv auf Phosphonatbasis, dargestellt durch die chemische Formel 1: 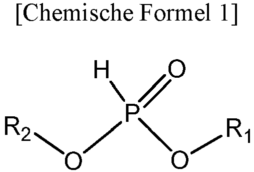
wobei in der chemischen Formel 1 R₁ und R₂ jeweils unabhängig voneinander ein substituierter oder unsubstituierter Kohlenwasserstoff mit 3 bis 10 Kohlenstoffatomen und einschließlich einer endständigen Alkinylgruppe sind.

2. Nichtwässrige Elektrolytlösung nach Anspruch 1, wobei das Additiv auf Phosphonatbasis durch die chemische Formel 1-1 dargestellt ist: 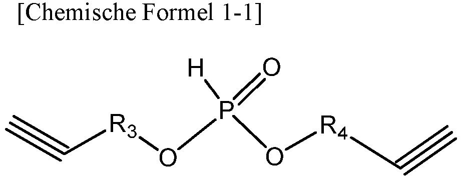 wobei in der chemischen Formel 1-1 R₃ und R₄ jeweils unabhängig voneinander eine substituierte oder unsubstituierte C₁-C₈-Alkylengruppe sind.

3. Nichtwässrige Elektrolytlösung nach Anspruch 2, wobei ein Substituent an mindestens ein Kohlenstoffatom der Alkylengruppe gebunden ist und der Substituent eine C1-C7-Alkylgruppe, eine C2-C7-Alkenylgruppe, eine C2-C7-Alkinylgruppe, eine C1-C7-Alkoxygruppe, Halogen, eine Cyanogruppe (-CN), eine Hydroxygruppe (-OH) oder eine Nitrogruppe (-NO₂) enthält.

4. Nichtwässrige Elektrolytlösung nach Anspruch 1, wobei die Menge des Additivs auf Phosphonatbasis von 0,1 Gew.-% bis 5 Gew.-%, bezogen auf das Gesamtgewicht der nichtwässrigen Elektrolytlösung, beträgt.

5. Eine Lithium-Sekundärbatterie, umfassend:
eine Kathode, die ein Lithium-Übergangsmetalloxid als aktives Material der Kathode enthält;
eine Anode;
eine Trennschicht, die zwischen der Anode und der Kathode angeordnet ist; und
die nichtwässrige Elektrolytlösung nach Anspruch 1.

6. Lithium-Sekundärbatterie nach Anspruch 5, wobei das Lithium-Übergangsmetalloxid durch die nachstehende chemische Formel 2 dargestellt ist:
[Chemische Formel 2] Li₁₊ₐNi_{1-(x+y)}CoₓM_{y}O₂
wobei in der chemischen Formel 2 -0,05≤a≤0,15, 0,01≤x≤0,3, 0,01≤y≤0,3 gilt und M mindestens ein Element enthält, das aus der Gruppe ausgewählt ist, die aus Mn, Mg, Sr, Ba, B, Al, Si, Ti, Zr oder W besteht.

7. Lithium-Sekundärbatterie nach Anspruch 6, wobei in der chemischen Formel 2, 0,01≤x≤0,2, 0,01≤y≤0,2 gilt.

## Revendications

1. Solution électrolytique non aqueuse comprenant :
un solvant organique non aqueux constitué de carbonate d'éthylène, de carbonate d'éthylméthyle et de carbonate de diéthyle ;
un sel de lithium ; et
un additif à base de phosphonate représenté par la formule chimique 1 : 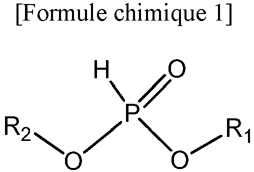
dans laquelle, dans la formule chimique 1, R₁ et R₂ représentent chacun, indépendamment l'un de l'autre, un hydrocarbure substitué ou non substitué comportant 3 à 10 atomes de carbone et comprenant un groupe alcynyle terminal.

2. Solution électrolytique non aqueuse selon la revendication 1, dans laquelle l'additif à base de phosphonate est représenté par la formule chimique 1-1 : 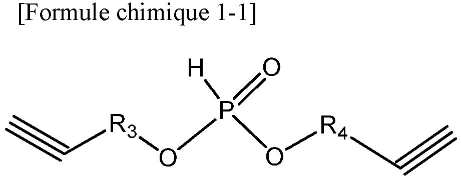 dans laquelle, dans la formule chimique 1-1, R₃ et R₄ représentent chacun, indépendamment l'un de l'autre, un groupe alkylène en C₁ -C₈ substitué ou non substitué.

3. Solution électrolytique non aqueuse selon la revendication 2, dans laquelle un substituant est lié à au moins un atome de carbone du groupe alkylène et le substituant est un groupe alkyle en C1- C7, un groupe alcényle en C2-C7, un groupe alcynyle en C2-C7, un groupe alcoxy en C1-C7, un halogène, un groupe cyano (-CN), un groupe hydroxy (-OH) ou un groupe nitro (-NO(_{2) )}.

4. Solution électrolytique non aqueuse selon la revendication 1, dans laquelle la quantité d'additif à base de phosphonate est comprise entre 0,1 % et 5 % en poids par rapport au poids total de la solution électrolytique non aqueuse.

5. Batterie secondaire au lithium comprenant :
une cathode contenant un oxyde de lithium et d'un métal de transition comme matériau actif de cathode ;
une anode ;
une couche de séparation disposée entre l'anode et la cathode ; et
la solution électrolytique non aqueuse selon la revendication 1.

6. Batterie secondaire au lithium selon la revendication 5, dans laquelle l'oxyde de lithium et de métal de transition est représenté par la formule chimique 2 ci-dessous :
[Formule chimique 2] Li₁₊ₐ Ni_{1-(x+y)} Coₓ M_{y} O₂
où, dans la formule chimique, 2 -0,05≤a≤0,15, 0,01≤x≤0,3, 0,01≤y≤0,3 et M contient au moins un élément choisi parmi le groupe constitué de Mn, Mg, Sr, Ba, B, Al, Si, Ti, Zr ou W.

7. Batterie secondaire au lithium selon la revendication 6, dans laquelle, dans la formule chimique 2, 0,01≤x≤0,2, 0,01≤y≤0,2.
